(19) Europäisches Patentamt / European Patent Office / Office européen des brevets

(11) **EP 2 735 855 A1**

(12) **EUROPEAN PATENT APPLICATION**

(43) Date of publication:
**28.05.2014 Bulletin 2014/22**

(51) Int Cl.:
*G01L 9/02* (2006.01)    *G01L 9/04* (2006.01)
*G01L 9/06* (2006.01)    *G01L 19/00* (2006.01)
*G01L 19/04* (2006.01)

(21) Application number: **12193715.5**

(22) Date of filing: **21.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Sensata Technologies, Inc.**
**Attleboro, MA 02703 (US)**

(72) Inventors:
• **Zwijze, Albert Ferdinand**
  **7672 AH Vriezenveen (NL)**

• **Berveling, Siebe Christiaan**
  **8651 HB IJlst (NL)**
• **Groenhuijzen, Serge**
  **7621 TZ Borne (NL)**
• **Kleissen, Werner John Peter**
  **7559 PT Hengelo (NL)**

(74) Representative: **de Hoog, Johannes Hendrik**
  **Octrooibureau de Hoog**
  **Gouverneurslaan 18 A**
  **3905 HE  veenendaal (NL)**

(54) **A measuring device for  measuring a physical quantity**

(57)      Disclosed is a measuring device (100) for measuring a physical quantity. The physical quantity could be a pressure and/or a force. The measuring device comprises a circular sensing structure (102) comprising a membrane section (102A) which is deflected by force variations acting on the circular sensing structure (102). A first and second strain gauge are attached to the membrane section. The first strain gauge is configured to measure radial strain in a first surface area of the membrane section. The second strain gauge is configured to measure tangential strain in a second surface area of the membrane section. An increase in force acting on the sensing structure results in shrinking of the first surface area measured by the first strain gauge and stretching of the second surface area measured by the second strain gauge.

FIG. 1

Description

TECHNICAL FIELD

The invention relates to a measuring device for measuring a physical quantity such as a pressure and/or a force. More particularly, the invention relates to a piezo-resistive measuring device.

BACKGROUND ART

A measuring device of the above type is known from EP1790964A1. The pressure-measuring device comprises a circular sensing structure and strain gauges attached to the sensing structure. The circular sensing structure comprises a membrane section which is deflected by pressure variations of the fluid acting on the circular sensing structure. The strain gauges measure the pressure dependent strain at a surface of the membrane section. A first strain gauge is configured to measure radial strain in a first surface area of the membrane section. A second strain gauge is configured to measure radial strain in a second surface area of the membrane section. An increase in pressure acting on the sensing structure results in shrinking (= negative strain) of the first surface area measured by the first strain gauge and stretching (= positive strain) of the second surface area measured by the second strain gauge. The first and second strain gauges are integrated in a sensing electrical element. Two of such sensing electrical elements are attached to the circular sensing structure. One sensing element could be used in a half Wheatstone bridge. Two sensing electrical elements each comprising a pair of strain gauges could be used in a full Wheatstone bridge.

The strain gauges are made of silicon and have a resistance which has a relationship with the strain measured in the surface. The costs of the sensing electrical elements could be reduced by reducing the size of the sensing electrical elements. Reducing the size means that the radial distance between the two strain gauges decreases and the difference in radial strain in the surface area below both strain gauges would decrease. This reduces the sensitivity of the sensing electrical element.

Furthermore, the resistance value of piezo-resistive strain gauges is very temperature dependent. A temperature difference of 0.2°C between the two resistors of a sensing element already results in an error of 1% full-scale. In current designs, the temperature difference can be up to 2°C which results in very large errors. By reducing the radial distance between the two strain gauges the temperature difference reduces and so the error. However, this is at costs of reduced sensitivity since the difference in radial strain under pressure between both resistors would reduce.

SUMMARY OF INVENTION

It is an object of the present invention to provide an improved measuring device for measuring a physical quantity which overcomes at least one of the disadvantages mentioned above. A physical quantity could be pressure, force or a combination of pressure and force. Another object of the invention to provide a measuring device which is at least one of: reliable, cheaper to manufacture, long lasting and/or robust to harsh pressure media, withstanding the high temperature and vibration typical of an internal combustion engine.

According to a first aspect of the invention, this object is achieved by a measuring device having the features of claim 1. Advantageous embodiments and further ways of carrying out the invention may be attained by the measures mentioned in the dependent claims.

A measuring device according to the invention is **characterized in that** the first strain gauge measures radial strain in the membrane section and the second strain gauge measures tangential strain in the membrane section.

The invention is based on the insight that when a force acting on the circular sensing structure increases there are areas on the circular sensing structure which stretch (= positive strain) and there are areas on the circular sensing structure which shrink (= negative strain). The force could be in the form of a pressure acting on the circular sensing structure. It has been found that the strain in radial direction might be different from the strain in tangential direction. This insight increases the degrees of freedom to design the circular sensing structure and to position the strain gauges on the circular sensing structure such that one strain gauge measures positive strain, i.e. stretch, and the other strain gauge measures negative strain, i.e. shrink, when the force increases.

In an embodiment, a resistance change in the first strain gauge due to a predefined increase in force is defined by the equation:

$$\Delta R_1 = GF_1 \times \varepsilon^- \times R_0$$

wherein $GF_1$ is the Gauge Factor, $\varepsilon^-$ is negative strain in the first surface and Ro is the unstrained resistance of the strain gauge. A resistance change in the second strain gauge due to the predefined increase in force is defined by the equation

$$\Delta R_2 = GF_2 \times \varepsilon^+ \times R_0$$

wherein $GF_2$ is the Gauge Factor, $\varepsilon^+$ is positive strain in the second surface and Ro is the unstrained resistance of the strain gauge. The first strain gauge and the second strain gauge have the following mutual relationship: $GF_1 \times \varepsilon^- = GF_2 \times \varepsilon^+$.

These features allow providing a pair of strain gauges which provide a comparable change in resistance whereas the strain in the surface might differ. This improves the accuracy of the electrical signal derive from the resistance values of the pair of strain gauges.

In an embodiment, the first strain gauge and the second strain gauge have a similar distance to a cylinder axis of the circular sensing-structure. This is possible on surface areas on the membrane section where the strain in radial direction is opposite to the strain in tangential direction. Due to the circular structure, this allows to attach two strain gauges at the same distance from the centre axis of the circular structure one measuring in radial direction and another in tangential direction. This further allows minimizing the distance between the two strain gauges, which reduces possible temperature difference between the two strain gauges without decreasing the sensitivity of the strain gauges.

In an embodiment, in use the membrane structure comprises radially a temperature gradient and the first and second strain gauge have an average temperature which differs less than 0.2°C from each other. This feature allows reducing thermal-shock effects in the electrical output signal below 1% full scale.

In an embodiment, the first strain gauge and the second strain gauge have a midpoint, the midpoint of the first and second strain gauge having a similar distance to a cylinder axis of the circular sensing-structure. This feature reduces the temperature difference between the two strain gauges.

In an embodiment, the first and second strain gauges are integrated in one sensing element. This reduces the temperature difference between the two strain gauges further.

In a further embodiment, the sensing electrical element comprises a first bond path, a second bond path and a third bond path. The second bond path is located between the first bond path and the third bond path. A first part of the first strain gauge is located between the first bond path and the second bond path, a second part of the first strain gauge is located between the second bond path and the third bond path, the second strain gauge is located adjacent a side of the first, second and third bond path. These features allow providing a sensing electrical element with reduced size which could be wire bonded with the same wire bond technology as used before.

In an embodiment, the device further comprises a third strain gauge and a fourth strain gauge. The third strain gauge is configured to measure radial strain in the membrane section and the fourth strain gauge is configured to measure tangential strain in the membrane section. These features enable to improve the sensitivity of the device. In a further embodiment, the first, second, third and fourth strain gauges are integrated in one sensing element. This feature allows reducing the manufacturing costs without concessions with respect to temperature sensitivity and signal quality.

In an embodiment, the circular sensing structure comprises an outer section and an inner section. The circular sensing structure allows the inner section to move relatively to the outer section along the cylinder axis of the circular sensing structure by deformation of the membrane section. It has been found that this type of sensing structures has a membrane with a surface having strain in radial direction which is opposite to the strain in tangential direction. The same applies when the inner section comprises a through hole. The ability to have smaller sensing electrical elements allows reducing the size of the circular sensing structure. This increases the applicability of the measuring device.

Other features and advantages will become apparent from the following detailed description, taken in conjunction with the accompanying drawings which illustrate, by way of example, various features of embodiments.

## BRIEF DESCRIPTION OF THE DRAWINGS

These and other aspects, properties and advantages will be explained hereinafter based on the following description with reference to the drawings, wherein like reference numerals denote like or comparable parts, and in which:

Fig. 1 shows schematically a sectional view of a pressure-measuring device;
Fig. 2 shows a top view of the circular sensing structure according to a first embodiment;
Fig. 3 shows a top view of the circular sensing structure according to a second embodiment;
Fig. 4 shows a graph with radial and tangential strain as a function of the radius;
Fig. 5 shows a prior art sensing electrical element;
Fig. 6 shows a first embodiment of a sensing electrical element;
Fig. 7 shows a second embodiment of a sensing electrical element;
Fig. 8 shows schematically a sectional view of a combined temperature and pressure-measuring device;
Fig. 9 shows a top view of the circular sensing structure shown in Fig. 8 according to a first embodiment;
Fig. 10 shows a top view of the circular sensing structure shown in Fig. 8 according to a second embodiment; and
Fig. 11 shows schematically a sectional view of another pressure-measuring device; and,
Fig. 12 shows a top view of the circular sensing structure shown in Fig. 11.

## DESCRIPTION OF EMBODIMENTS

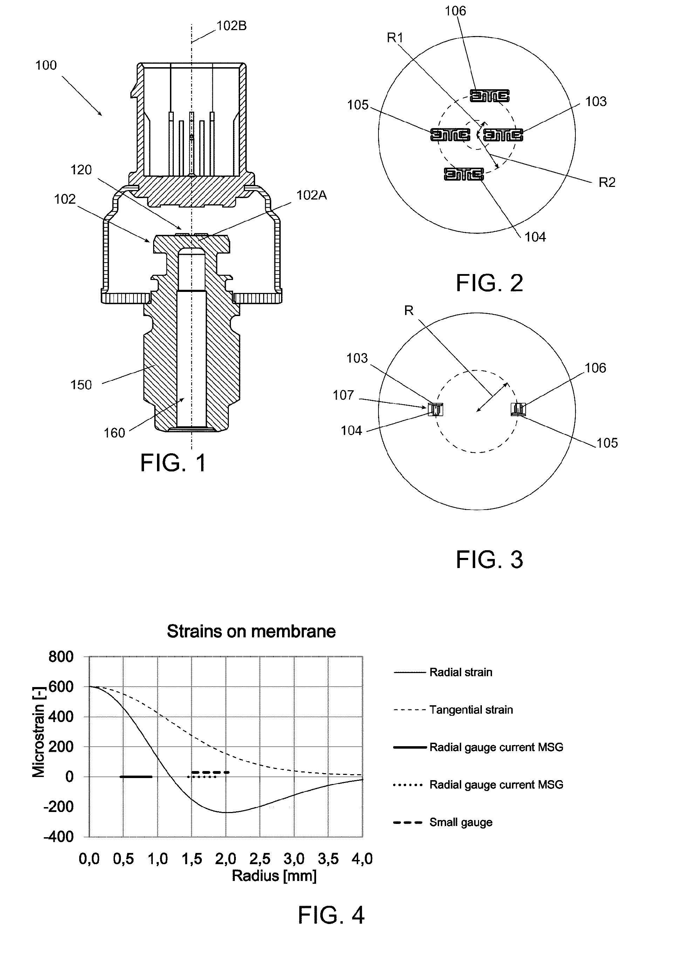

Fig. 1 shows schematically a sectional view of a pressure-measuring device 100 for measuring pressure in a fluid. The fluid could be in the form of a gas or a liquid. The device 100 is in the form of a pressure measuring plug and comprises a circular sensing structure 102. The circular sensing structure 102 comprises a plug body section 150 with an external thread for mounting the pressure-measuring device 100 in a hole of an engine or installation. The circular sensing structure further comprises a membrane section 102A. The membrane section 102A is located at a proximal end of the plug body section 150. The plug body section 150 comprises a passage 160 from the proximal end to a distal end. The pressure of the fluid can act on the membrane section 102A through the passage. Strain gauges 120 are attached to an outer side of the membrane section 102A. The outer side is a surface of the membrane section 102A opposite of the surface of the membrane section that is in contact with the fluid via passage 160.

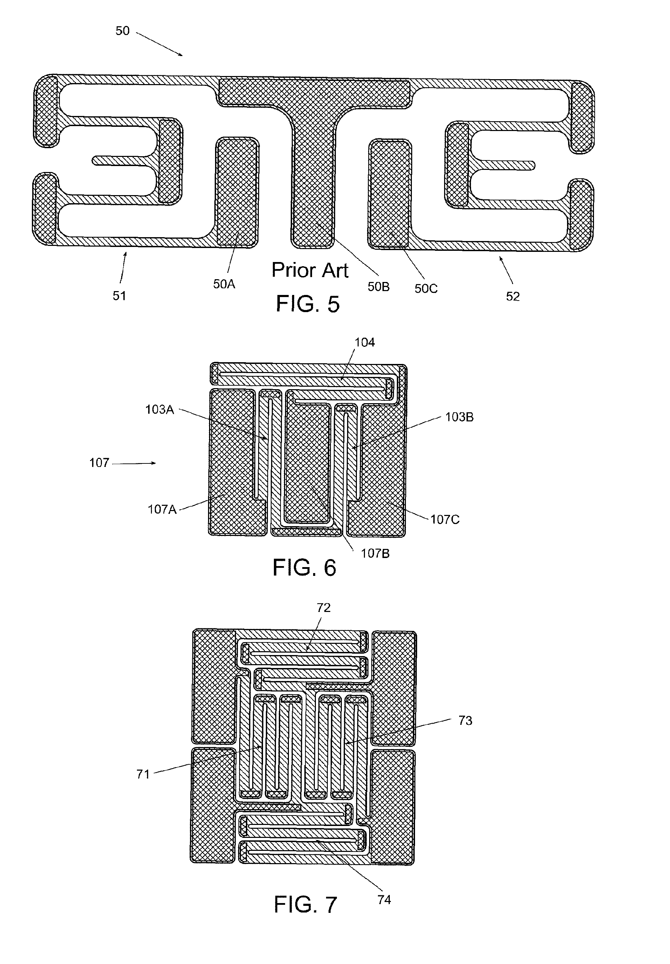

The strain gauges 120 are configured to measure strain in the surface of the membrane section 102A. The strain gauges could be in the form of piezo-resistive elements. This type of strain gauges has a higher Gauge Factor (GF) than metal strain gauges. However, the idea of the invention could also be applied in pressure-measuring devices or force-measuring devices with metal strain gauges. Fig. 5 shows the layout of a prior art sensing electrical element 50 comprising two strain gauges 51, 52. The strain gauges are configured to measure strain along a length axis of the sensing electrical element 50. Three bond paths 50A, 50B and 50C are located between a first strain gauge 51 and a second strain gauge 52 of the sensing electrical element. As the working principle of a strain gauge is common knowledge it is not described in further detail. A characteristic of a strain gauge is that it measures strain in a particular direction. The strain gauges could be in the form of Microfused Silicon Strain gauge. In this technology, the silicon MEMS strain gauge elements are glass-bonded to a stainless steel diaphragm. The sensing electrical element 50 has a length of 1.56mm and a width of 0.48mm.

Fig. 4 shows a graph with radial and tangential strain as a function of the radius. Positive strain is strain with a positive value and corresponds to stretch in the surface in a particular direction. Negative strain is strain with a negative value in the graph and corresponds to shrink in the surface in a particular direction. When a pressure is acting on the membrane section, the surface near the central axis 102B of the circular sensing structure has stretch in both radial and tangential direction. It can further be seen that the radial strain decrease with increase of the radius, i.e. the distance to the central axis 102A. At a radius of about 1,2mm the radial strain is almost zero. Then with increase of radius the strain becomes negative, i.e. shrink in radial direction. The highest shrink is at a radius of 2mm. Then the amount of shrink decreases with increase of the radius. Fig. 4 further shows that the tangential strain decreases gradually with increase of the radius but is always positive.

The working principle of the prior art gauge is that both strain gauges of the sensing electrical element measure radial strain but at two different radiuses. In Fig.

2, which shows a top view of the circular sensing structure of Fig.1, the radiuses are indicated with R1 and R2. In Fig. 4 are illustrated the regions of radiuses measured by the two radial gauges of prior-art MSG (Microfused Silicon Strain Gage) as shown in Fig. 5. It can be seen that one strain gauges measures positive strain and the other strain gauge measures negative stain. The two strain gauges are used in a half bridge of a Wheatstone bridge.

It can further be seen that it is possible to measure both positive strain and negative strain with comparable values at a position with a radius of 1,7mm. This could be done by measuring radial strain and tangential strain. Fig.2 shows an embodiment with prior art sensing electrical elements wherein only one of the strain gauges is used to measure radial strain or tangential strain. Strain gauges 103 and 105 measure radial strain with one strain gauge of the prior art sensing electrical element shown in Fig. 5. These prior art strain gauges are positioned with their length axis in radial direction. Strain gauges 104 and 106 measure tangential strain with one strain gauge of the prior art sensing electrical element shown in Fig. 5. These prior art strain gauges are positioned with their length axis perpendicular to the radial direction.

Fig. 3 shows a top view of the circular sensing structure according to a second embodiment for the sensing structure in Fig.1. In this embodiment radius R corresponds to radius R2 in Fig. 2. Two sensing electrical elements 107 are attached to the surface of the membrane section at a radius R. The sensing electrical elements 107 have a layout as shown in Fig. 6. A first strain gauge formed by the first part 103A and second part 103B measures strain in a first direction. A second strain gauge 104 measures strain in a second direction. The second direction is perpendicular to the first direction. "Small gauge" in Fig. 4 indicates the area on which a sensing electrical element as shown in Fig. 6 measures both radial and tangential strain. In tangential direction positive strain is measured and in radial direction negative strain is measured.

The sensing electrical element 107 further comprises a first bond path 107A, a second bond path 107B and a third bond path 107C. The second bond path is located between the first bond path and the third bond path. The first part 103A of the first strain gauge is located between the first bond path and the second bond path. The second part 103B of the first strain gauge is located between the second bond path and the third bond path. The second strain gauge 104 is located adjacent a side of the first, second and third bond path. The sensing electrical element 107 has a length of 0.52mm and a width of 0.46mm. The bond paths 107A, 107B and 107C have corresponding size and location as the bond paths of the prior art sensing electrical element 50 shown in Fig. 5. This enables to use the same wire bonding technology for both sensing electrical elements. The size of the sensing electrical element is 1/3 of the size of the sensing electrical element shown in Fig. 5. This allows for smaller package and lower costs price of a sensing element.

In Fig. 3 can be seen that the two sensing electrical elements are attached to top surface of membrane in such a way that the midpoint of the area of first strain gauge and the midpoint of the second strain gauge are located at circle with radius R. Strain gauges 103 and 105 measure radial strain and strain gauges 104 and 106 measure tangential strain. An advantage of this embodiment over the embodiment shown in Fig. 2 is that it has smaller thermal gradient errors.

The smaller sensing electrical element allows for measurement in almost one point and has comparable signal amplitudes because of same amplitudes for both the negative radial strain and positive tangential strain. Furthermore, in the small gage design non-linearity is zero because the Wheatstone bridge remains balanced when a pressure, a force or a combination of a pressure and force is acting on the circular sensing structure.

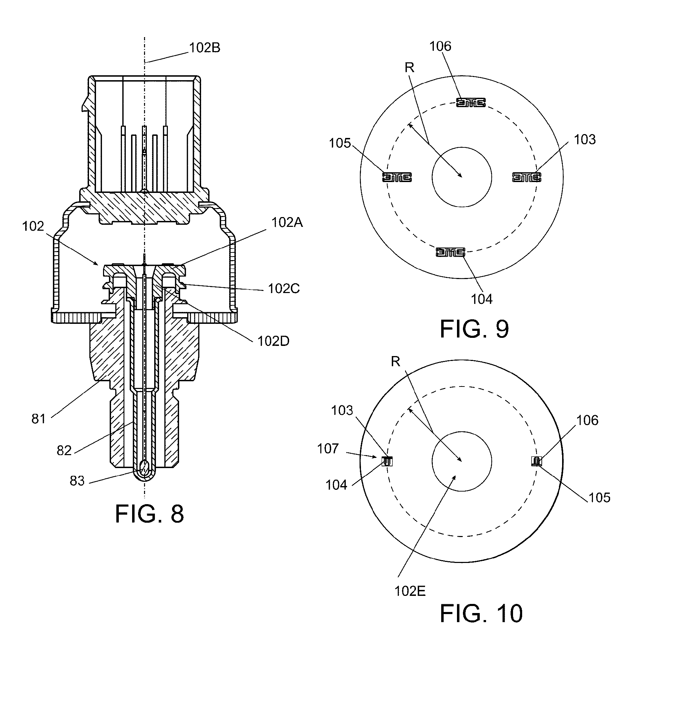

Fig. 8 shows schematically a sectional view of a combined temperature and pressure-measuring device for measuring a pressure and a temperature in a fluid. The measuring device comprises a circular sensing structure 102 which is attached to a threaded body part 81. The circular sensing structure 102 comprises an outer section 102C and an inner section 102D, the circular sensing structure allows the inner section 102D to move relatively to the outer section 102C along the cylinder axis 102B of the circular sensing structure 102 by deformation of the membrane section 102A. An elongated hollow body 82 with a closed end is attached to the inner section 102D. A temperature sensing element 83 is positioned in the closed end of the elongated hollow body 82. The circular sensing structure 102 comprises a through hole 102E for passing electrical wires of the temperature sensing element.

Fig. 9 shows a top view of the circular sensing structure shown in Fig. 8 according to a first embodiment. In this embodiment, prior art sensing electrical elements with a layout shown in Fig. 5 are used. From each prior art sensing electrical elements only one of the strain gauges is used to measure radial strain or tangential strain. Strain gauges 103 and 105 measure radial strain. These prior art sensing elements are positioned with their length axis in radial direction. Strain gauges 104 and 106 measure tangential strain. These prior art sensing elements are positioned with their length axis perpendicular to a radial of the circular sensing structure. In this embodiment, the midpoint of the effective measuring area of the strain gauges is at a distance R from the centre axis 102B of the circular sensing structure.

Fig. 10 shows a top view of the circular sensing structure according to a second embodiment for the sensing structure in Fig.8. Two sensing electrical elements 107 are attached to the surface of the membrane section at a radius R. The sensing electrical elements 107 have a layout as shown in Fig. 6. First strain gauges 103 and 105 of the sensing electrical elements 107 measure strain in radial direction. Second strain gauges 104 and 106 of the sensing electrical elements measure strain in tangential direction.

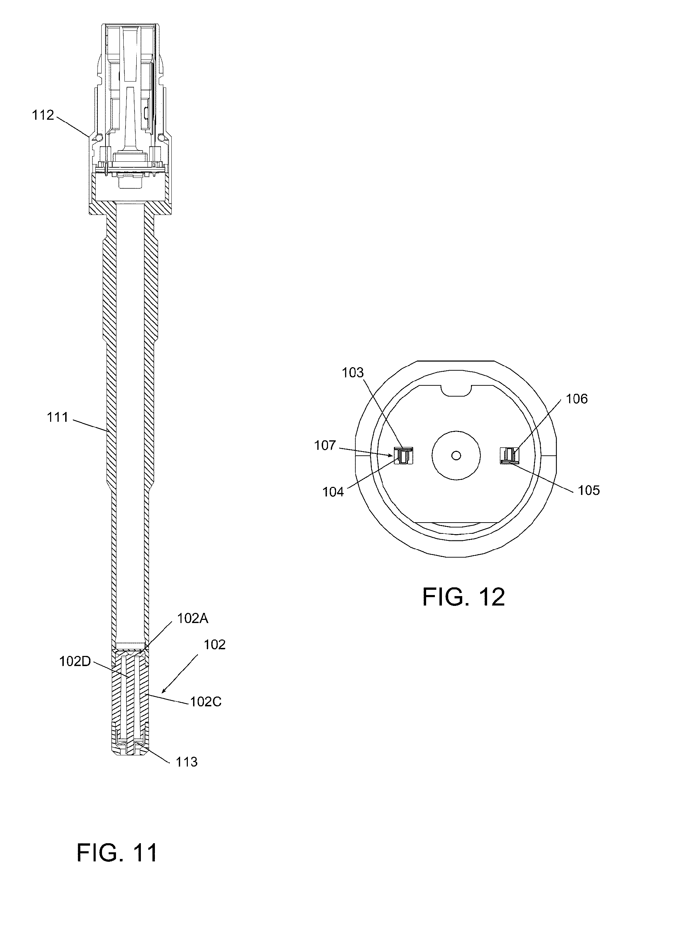

Fig. 11 shows schematically a sectional view of another pressure-measuring device in the form of a pressure-measuring plug. This pressure-measuring device is suitable for use in a combustion engine. The device comprises an elongated hollow threaded body part 111. A housing 112 with connector is attached to a proximal end of the body part 111. The housing 112 accommodates electronics for processing the signals from the strain gauges. A circular sensing structure 102 is attached to a distal end of the body part 111.

The circular sensing structure 102 comprises an outer section 102C and an inner section 102D. The circular sensing structure allows the inner section 102D to move relatively to the outer section 102C along the cylinder axis 102B of the circular sensing structure 102 by deformation of the membrane section 102A when a force is acting on the inner section. A flexible membrane 113 is attached to the outer section 102 and the inner section 102D. The flexible membrane 113 forms a sealing which protects the membrane section 102A against the harsh environment of the combustion gasses. A pressure acting on the flexible membrane 113 and the inner section 102D is converted to a force which is transported via the inner section 102D to the membrane section 102A as a result of which the membrane section 102A deforms.

The inner section 102D could comprise an axial passage for positioning a rod-like element in the inner section. In this way, a second function could be added to the pressure-measuring device. Examples of a second function are: glow plug, temperature sensor. Fig. 12 shows a top view of the circular sensing structure shown in Fig. 11 which is provided with sensing electrical elements as shown in Fig. 6. Due to the small size of the circular sensing structure 120, it is not possible to attach prior art sensing electrical elements to the surface of the membrane section 102A. Two sensing electrical elements 107 are attached to the surface of the membrane section. First strain gauges 103 and 105 of the sensing electrical elements 107 measure strain in radial direction. Second strain gauges 104 and 106 of the sensing electrical elements measure strain in tangential direction.

It should be noted that the strain gauges in sensing electrical elements have substantially the same Gauge Factor. The Gauge factor (GF) or strain factor of a strain gauge is the ratio of relative change in electrical resistance to the mechanical strain $\varepsilon$, which is the relative change in length. As a consequence the Wheatstone bridge is balanced if the mechanical strain $\varepsilon$ in the surface below the first strain gauge and the second strain gauge is similar in amplitude but opposite in sign.

A resistance change in the first strain gauge due to a predefined increase in pressure, force or combination of pressure and force is defined by the equation:

$$\Delta R_1 = GF_1 \times \varepsilon^- \times R_0$$

wherein $GF_1$ is the Gauge Factor, $\varepsilon^-$ is negative strain in the first surface and $R_0$ is the unstrained resistance of the strain gauge. A resistance change in the second strain gauge due to the predefined increase in pressure, force or combination of pressure and force is defined by the equation

$$\Delta R_2 = GF_2 \times \varepsilon^+ \times R_0$$

wherein $GF_2$ is the Gauge Factor, $\varepsilon^+$ is positive strain in the second surface and $R_0$ is the unstrained resistance of the strain gauge.

If there is no area on the surface of the membrane available to attach a sensing electrical element for which holds $\varepsilon_{radial} = -\varepsilon_{tangential}$ it is possible to adapt the Gauge Factor of the strain gauges such that the first strain gauge and the second strain gauge have the following mutual relationship: $GF_1 \times \varepsilon^- = GF_2 \times \varepsilon^+$. In that case the Wheatstone bridge is again balanced.

Fig. 7 shows an embodiment of a sensing electrical element wherein four strain gauges are integrated. Strain gauges 71 and 73 measure strain in a first direction. Strain gauges 72 and 74 measure strain in a second direction. The second direction is perpendicular to the first direction. This sensing electrical element provides all resistors for a full Wheatstone bridge. Only four "bond" wires are needed to couple the four strain gauges to the corresponding electronics, whereas six "bond" wires are needed to couple two sensing electrical elements with two strain gauges as shown in Fig. 5 and 6 to the corresponding electronics. This provides possibilities to reduce manufacturing costs of the measuring device for measuring a physical quantity such as a pressure and force. Furthermore, this "Full bridge" design allows reducing temperature gradient errors further.

By using the sensing elements shown in Fig. 6 and 7 a strain measurement in two perpendicular directions can be performed, which allows to do a so-called single point measurement on one point on the membrane section. A radial and tangential strain are measured which are opposite in sign. In this case the influence of thermal gradients will be reduced significantly since the resistors that measure radial and tangential strain are on substantially the same radius and have substantially the same temperature.

The embodiments shown above all relate to a measuring device measuring the physical quantity pressure. In the measuring device shown in Fig. 11, the pressure acting on a flexible membrane and inner section of the circular sensing structure is converted in a force. Force is another physical quantity. Pressure can be defined as the amount of force per unit area. The force is transported via the inner section to the membrane section of the circular sensing structure. The force deforms the membrane section and the deformation is measured by the strain gauges. Thus a circular sensing structure could also be used in applications which measure force instead of pressure. Such other applications are: occupant weight sensors, weight sensors in general, pedal force sensor and any other application wherein a force is acting one particular axial direction. A force along a axis parallel to the cylinder axis of the circular sensing structure could then be transported via the inner section to the membrane section of the circular sensing structure. Thus a circular sensing structure as described above is suitable to measure physical quantities such as force and pressure. It is also possible that the circular sensing structure measures a combination of force and pressure if a pressure is directly acting on the membrane section. A circular sensing structure as shown in Fig. 8 could also be used to convert a force acting on the inner section of the circular sensing structure to a strain in the membrane section in radial and tangential direction wherein the strain in radial direction is opposite to the strain in tangential direction.

While the invention has been described in terms of several embodiments, it is contemplated that alternatives, modifications, permutations and equivalents thereof will become apparent to those skilled in the art upon reading the specification and upon study of the drawings. The invention is not limited to the illustrated embodiments. Changes can be made without departing from the idea of the invention.

## Claims

1. A measuring device (100) for measuring a physical quantity, the measuring device comprising:

   - a circular sensing structure (102) comprising a membrane section (102A) which is deflected by force variations acting on the circular sensing structure (102); and,
   - a first strain gauge and second strain gauge attached to the membrane section, the first strain gauge is configured to measure strain in a first surface area of the membrane section and the second strain gauge is configured to measure strain in a second surface area of the membrane section, an increase in force acting on the sensing structure results in shrinking of the first surface area measured by the first strain gauge and stretching of the second surface area measured by the second strain gauge, **characterized in that**, the first strain gauge (103) measures radial strain in the membrane section and the second strain gauge (104) measures tangential strain in the membrane section.

2. The measuring device according to claim 1, wherein the first strain gauge and the second strain gauge are piezo-resistive elements.

3. The measuring device according to any of the claims 1 - 2, wherein a resistance change in the first strain gauge due to a predefined increase in force is defined by the equation:

$$\Delta R_1 = GF_1 \times \varepsilon^- \times R_0$$

wherein $GF_1$ is the Gauge Factor, $\varepsilon^-$ is negative strain in the first surface and Ro is the unstrained resistance of the strain gauge, and
a resistance change in the second strain gauge due to the predefined increase in force is defined by the equation

$$\Delta R_2 = GF_2 \times \varepsilon^+ \times R_0$$

wherein $GF_2$ is the Gauge Factor, $\varepsilon^+$ is positive strain in the second surface and Ro is the unstrained resistance of the strain gauge, the first strain gauge and the second strain gauge have the following mutual relationship: $GF_1 \times \varepsilon^- = GF_2 \times \varepsilon^+$.

4. The measuring device according to any of the claims 1 - 3, wherein the first strain gauge and the second strain gauge have a similar distance R2 to a cylinder axis of the circular sensing-structure.

5. The measuring device according to any of the claims 1 - 4, wherein in use the membrane structure comprises radially a temperature gradient and the first and second strain gauge have an average temperature which differs less than 0.2°C from each other.

6. The measuring device according to any of the claims 1-5, wherein the first strain gauge (103) and the second strain gauge (104) have a midpoint, the midpoint of the first and second strain gauge having a similar distance (R2) to a cylinder axis of the circular sensing-structure (102B).

7. The measuring device according to any of the claims 1 - 6, wherein the first and second strain gauge are integrated in one sensing element (107).

8. The measuring device according to claim 7, wherein the sensing element comprises a first bond path (107A), a second bond path (107B) and a third bond path (107C), the second bond path is located between the first bond path and the third bond path, a first part (103A) of the first strain gauge is located between the first bond path and the second bond path, a second part (103B) of the first strain gauge is located between the second bond path and the third bond path, the second strain gauge (104) is located adjacent a side of the first, second and third bond path.

9. The measuring device according to any of the claims 1 - 8, the device further comprises a third strain gauge (105) and a fourth strain gauge (106), wherein the third strain gauge is configured to measure radial strain in the membrane section and the fourth strain gauge is configured to measure tangential strain in the membrane section.

10. The measuring device according to claim 9, wherein the first, second, third and fourth strain gauge are integrated in one sensing element.

11. The measuring device according to any of the claims 1-10, wherein the strain gauges are Microfused Silicon Strain gauges.

12. The measuring device according to any of the claims 1 - 11, wherein the circular sensing structure (102) comprises an outer section (102C) and an inner section (102D), the circular sensing structure allows the inner section (102D) to move relatively to the outer section (102C) along the cylinder axis (102B) of the circular sensing structure (102) by deformation of the membrane section (102A).

13. The measuring device according to claims 12, wherein the inner section (102D) comprises a through hole (102E).

14. The measuring device according to any of the claims 1 - 13, wherein the physical quantity is a pressure and/or a force acting on the circular sensing structure.

FIG. 1

FIG. 2

FIG. 3

**Strains on membrane**

— Radial strain

- - - - Tangential strain

— Radial gauge current MSG

······ Radial gauge current MSG

– – – Small gauge

FIG. 4

Prior Art

FIG. 5

FIG. 6

FIG. 7

FIG. 8

FIG. 9

FIG. 10

112

111

102A

102D

102

102C

113

FIG. 11

103

106

107

104

105

FIG. 12

**Europäisches Patentamt**
**European Patent Office**
**Office européen des brevets**

# EUROPEAN SEARCH REPORT

Application Number

EP 12 19 3715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | EP 0 321 097 A2 (BABCOCK & WILCOX CO [US]) 21 June 1989 (1989-06-21)<br>* the whole document * | 1-4,6,9, 12,14<br>7,8,10, 11,13<br>5 | INV.<br>G01L9/02<br>G01L9/04<br>G01L9/06<br>G01L19/00<br>G01L19/04 |
| X<br><br><br><br><br>Y | R. Werthdchützky:<br>In: G. Pfeifer, R. Werthdchützky: "Drucksensoren",<br>1989, VEB VERLAG, Berlin, XP002695868,<br>ISBN: 3-341-00660-5<br>pages 100-113,<br>* the whole document * | 1<br><br><br><br><br>7,8,10, 11 | |
| Y,D | EP 1 790 964 A1 (SENSATA TECHNOLOGIES HOLLAND B [NL]) 30 May 2007 (2007-05-30)<br>* the whole document * | 13 | |
| Y | US 4 311 980 A (PRUDENZIATI MARIA) 19 January 1982 (1982-01-19)<br>* the whole document * | 1,3,4,6, 9,12,14 | TECHNICAL FIELDS SEARCHED (IPC) |
| Y | US 3 772 628 A (UNDERWOOD J ET AL) 13 November 1973 (1973-11-13)<br>* the whole document * | 1,3,4,6, 9,12,14 | G01L |
| A | US 3 277 698 A (MASON WARREN P) 11 October 1966 (1966-10-11)<br>* the whole document * | 1-14 | |

The present search report has been drawn up for all claims

| Place of search | Date of completion of the search | Examiner |
|---|---|---|
| The Hague | 23 April 2013 | Stavroulis, Stefanos |

**ANNEX TO THE EUROPEAN SEARCH REPORT
ON EUROPEAN PATENT APPLICATION NO.**

EP 12 19 3715

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2013

| Patent document cited in search report | | Publication date | Patent family member(s) | | Publication date |
|---|---|---|---|---|---|
| EP 0321097 | A2 | 21-06-1989 | AU 2103888 A | | 22-06-1989 |
| | | | BR 8803885 A | | 25-07-1989 |
| | | | CA 1309878 C | | 10-11-1992 |
| | | | CN 1034060 A | | 19-07-1989 |
| | | | CS 8808331 A3 | | 19-02-1992 |
| | | | DD 276152 A5 | | 14-02-1990 |
| | | | EP 0321097 A2 | | 21-06-1989 |
| | | | IN 169658 A1 | | 30-11-1991 |
| | | | JP H01197621 A | | 09-08-1989 |
| | | | PL 276464 A1 | | 21-08-1989 |
| | | | RO 103775 B1 | | 23-12-1993 |
| EP 1790964 | A1 | 30-05-2007 | NONE | | |
| US 4311980 | A | 19-01-1982 | CH 638045 A5 | | 31-08-1983 |
| | | | DE 2940441 A1 | | 24-04-1980 |
| | | | ES 8103375 A1 | | 16-05-1981 |
| | | | ES 8206025 A1 | | 01-11-1982 |
| | | | FR 2438829 A1 | | 09-05-1980 |
| | | | GB 2036424 A | | 25-06-1980 |
| | | | NL 7907294 A | | 15-04-1980 |
| | | | PT 70292 A | | 01-11-1979 |
| | | | US 4311980 A | | 19-01-1982 |
| US 3772628 | A | 13-11-1973 | NONE | | |
| US 3277698 | A | 11-10-1966 | NONE | | |

For more details about this annex : see Official Journal of the European Patent Office, No. 12/82

**EP 2 735 855 A1**

**Patent documents cited in the description**

- EP 1790964 A1